Europäisches Patentamt

European Patent Office

Office européen des brevets

(19)

(11) Publication number: **0 041 262**
**B1**

(12) **EUROPEAN PATENT SPECIFICATION**

(45) Date of publication of patent specification: **04.04.84**

(51) Int. Cl.³: **H 04 M 3/36, G 06 F 15/20**

(21) Application number: **81104177.1**

(22) Date of filing: **01.06.81**

(54) **Programmable telephone-traffic measuring equipment.**

(30) Priority: **03.06.80 IT 6786080**

(43) Date of publication of application:
**09.12.81 Bulletin 81/49**

(45) Publication of the grant of the patent:
**04.04.84 Bulletin 84/14**

(84) Designated Contracting States:
**AT BE CH DE FR GB LI NL SE**

(56) References cited:
FR - A - 2 361 697
US - A - 3 928 803
US - E - 28 109

THE POST OFFICE ELECTRICAL ENGINEERING
JOURNAL, vol. 72, part 3, October 1979,
LONDON (GB) J.D. SMITH et al.: "A
Microprocessor Controlled Teletraffic Logging
Device", pages 149-152

(73) Proprietor: **SIP Soc. Italiana per l'Esercizio
Telefonico p.a.
Via San Dalmazzo, 15
I-10122 Turin (IT)**

(72) Inventor: **Furlan, Antonio
Via Podgora, 89
Venezia-Mestre (IT)**
Inventor: **Thiella, Francesco
Via Einaudi, 23
Venezia-Mestre (IT)**
Inventor: **Tibaldo, Flavio
Via Einaudi, 37/5
Venezia-Mestre (IT)**

(74) Representative: **Riederer Freiherr von Paar zu
Schönau, Anton
Freyung 615 Postfach 2664
D-8300 Landshut (DE)**

(56) References cited:
COMMUTATION ET ELECTRONIQUE, no. 53,
April 1976, PARIS (FR) P. CASTEX et al.:
"Présentation de l'équipement de saisie du trafic
dans les organes communs Projet Estoc", pages
13-24

Courier Press, Leamington Spa, England.

(56) References cited:

INTERNATIONAL SWITCHING SYMPOSIUM, October 25-29, 1976 KYOTO (JP) A. DE FLAMMINEIS et al.: "The Automation of Maintenance and Administrative functions in traditional and electronic Switching Systems", pages 433.2.1 to 433.2.8

SIEMENS ZEITSCHRIFT, vol. 42, no. 4, April 1968, ERLANGEN (DE) W. BORISSOFF et al.: "Verkehrsgrössen-Abtasteinrichtung VGA 68", pages 278-280

## Programmable telephone-traffic measuring equipment

The invention refers to a programmable telephone-traffic measuring equipment to be connected to an exchange for cyclically extracting from exchange devices samples of signalling criteria, processing said samples and issuing traffic data, said measuring equipment comprising a measuring apparatus which contains: extracting means extracting the samples and comprising a plurality of probes each connected to a wire each connectable to one measuring point in the plurality of exchange devices for carrying one of the criteria in form of an impulsive voltage, each probe being designed for bringing the impulsive voltage level to values comprised within an interval suitable for the further processing, and further comprising a multiplexer the inputs of which are connected to the outputs of the probes; a comparator receiving at its inputs for comparison the outputs of the multiplexer and a threshold value and indicating by its own output signal, for wire by wire, the higher-lower-relation of its associated input values; and a stored-program processing unit processing the data represented by said criteria and being supplemented by memory means for storing the program and the processed data.

It is known that to measure telephone traffic a number of signalling criteria are to be extracted by suitable probes from the exchange devices and the raw data represented by said criteria are to be processed. Since measurements requested nowadays can be very complex, it is convenient that the processing is carried out by stored-program systems and not by wired-logic systems.

Various equipments of this kind are known in the art. Yet they are generally specialized for a kind of measurements (e.g. traffic intensity, availability, destination, service quality, distribution per hour and rate group), or for a kind of device they supervise (e.g. selectors, metering pulse generators, . . . ,) or for a kind of exchange (telephone criteria are coded differently by the various manufacturers, for instance as concerns pulse sequences on a same wire or on different wires of the same device). Furthermore the existing equipments can be only used either for impulsive criteria or for multifrequency criteria.

Particularly, there is known (The Post Office Electrical Engineering Journal, Vol. 72, part 3, October 1979, London, J. D. Smith et al, pages 149 to 152) an equipment as stated above, wherein the comparator operates with fixed threshold values and timing and address generators serve for controlling collection of the samples of the criteria. No possibility is provided for further processing of the collected data. The program for the processing unit is stored in a read-only memory. Difficulties appear if the intended application of the equipment is changed: in this case, circuit modifications will be necessary and the memory is to be replaced or, if possibly, to be reprogrammed so that hardware modifications or the presence of a programmer are necessary.

Further, measuring equipments are known (FR—A 2 361 697; Commutation et Electronique, No. 53, April 1976, Paris, P. Castex et al, pages 13 to 24), wherein different probe circuits are required to detect criteria represented by different voltage conditions, and circuit modifications are required for adapting the probes to different applications. Also, no further processing of the collected data in an additional supplementing device is provided for.

The invention is to provide for a very versatile measuring equipment which can be used for different kinds of measurements and can extract criteria from different kinds of devices and exchanges.

Starting out from a measuring equipment as stated above, the invention is characterized in that the probes are composed of voltage dividers identical to each other and operating according to the same voltage reduction ratio irrespective of the criterion being sensed and the input supplying the threshold value to the comparator is connected to a variable value generator the output value of which is determined by the processing unit depending on the criterion being sensed.

By this measure, the signals on a wire by pure program steps can be compared with any reference value thus providing a universal and extremely flexible equipment. This also holds if the comparator has to carry out several comparisons in parallel. The probes can be identical to one another leading to a simple structure in spite of the universal applicability. By directly controlling also the multiplexer from the processing unit, also the sampling periodicity and order can be selected according to the respective purpose.

For providing for an easy possibility of changing the program, the memory is preferably arranged so as to offer an area for the program to be carried out. Since the comparators are directly interrogated by the processor, the useful information, namely each state variation on a wire and the instant of said variation, can be immediately stored and the processing power can be entirely ddicated to the collection of such an information. The more sophisticated processings can be then effected off-line.

For an even more versatile applicability and evaluation of the results of the measuring equipment which so far may be implemented as a portable apparatus, the equipment may be supplemented by additional devices, i.e. a device for executing measurements starting from sinusoidal criteria and/or tones, a device for extracting criteria from insertion networks and a device to execute continued recordings of large amounts of data.

Further developments and characteristics of the measuring equipment according to the invention may be derived from the following description of a preferred embodiment and its way of working, described with reference to the drawings which show:

— Fig. 1 a block diagram of the measuring equipment in the form of an apparatus connected to an exchange;

— Fig. 2 the connection of the measuring apparatus to a device for the detection of sinusoidal criteria and tones;

— Fig. 3 a block diagram of the additional device of Fig. 2;

— Fig. 4 the connection of the measuring apparatus to a different measuring apparatus of the kind known as VGA;

— Fig. 5 the diagram of part of an apparatus VGA and of an additional device for establishing the connection of Fig. 4;

— Fig. 6 the diagram of a variant of Fig. 1 allowing continuous data recordings;

— Figures 7 to 12 flow charts depicting the operations of the measuring equipment.

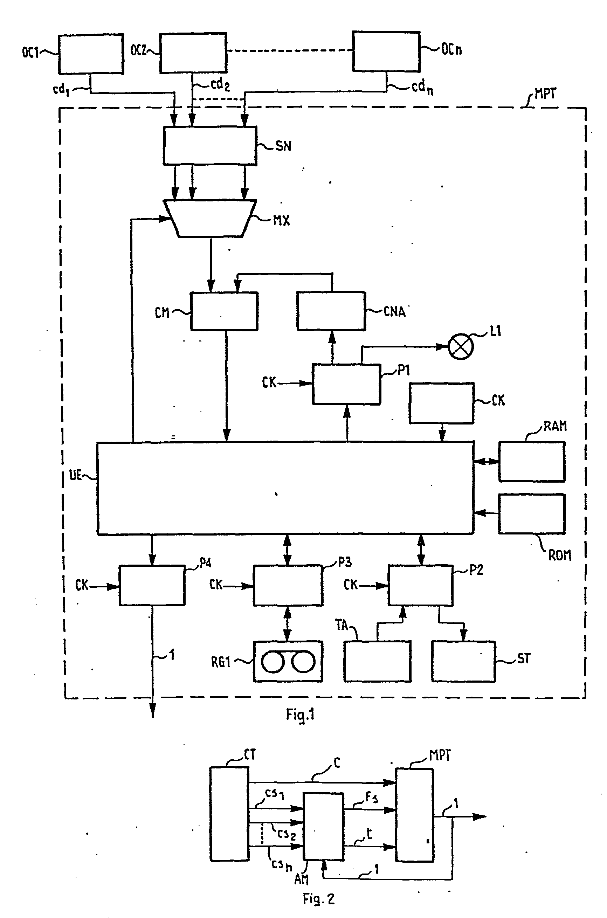

In Fig. 1, references OC1, OC2 ... OCn denote a plurality of devices in a telephone exchange wherefrom impulsive (or digital) signalling criteria (seizure, dialled digits, answer etc.), represented by a number of voltage levels, are to be extracted to carry out traffic measurements. The criteria are present at a certain number of measurement points of each device, which points can be connected with as many wires of a measuring equipment comprising a measuring apparatus, denoted by MPT. The number of points from which the criteria can be extracted determines the number of the devices which can be controlled and the equipment dimensions.

By way of example, when necessary, reference will be made to the case of 256 measurement points, which can correspond to 128 devices controllable by two wires, to 64 devices controllable by 4 wires, or to any other combination. Such a number of points can infact be controlled by a portable equipment, and no problem arises from the bulk of the wires which transfer the criteria to the measuring equipment. To make the drawing simpler only one output wire $cd_1$, $cd_2$ ..., $cd_n$ has been represented for each of the devices $OC_1 ... OC_n$.

The 256 wires $cd_1 ... cd_n$ are connected to as many probes, denoted as a whole by SN; said probes are essentially voltage sensors, consisting of dividers designed to bring the voltage present on wires $cd_1 ... cd_n$ from the values necessary to the operation of the exchange devices (typically, values ranging between 0 and −48 to −60V) to the values necessary to the operation of the logic circuits of the measuring apparatus (typically, values ranging from 0 to +12V). The use of positive voltages at the probe output allows precise measurement of negative voltages (e.g. with differences of the order of 1V or even less), and the indentification of superpositive voltages. The measurable field ranges for instance from −70V to +10V. The embodiment of such dividers is not a problem to the person skilled in the art.

The outputs of probes SN are connected to the inputs of a multiplexer MX, which is controlled by a processing unit UE of measuring apparatus MPT.

This multiplexer presents a multiple output on which it transfers in parallel the signals present on a number of inputs and relating to the same criterion. In particular, if the processing unit UE operates on 8 bits, multiplexer MX will transfer each time to the output the signals present on 8 inputs.

The output of MX is connected to a first set of inputs of a comparator CM, which receives at a second group of inputs a threshold voltage with which the voltages present at the output of MX are to be compared. Such a threshold voltage is supplied to CM through a digital-to-analog converter CNA, which receives from UE the digitally coded threshold value; said value is program determined and depends on the nature of the sensed criterion.

For each of the input wires comparator CM emits a binary signal whose logic value indicates whether the voltage present at the input is higher or lower than the threshold. The output of CM is connected to processing unit UE.

The use of a comparator with program-settable threshold allows the use of probes with the same division ratio, said ratio being independent of the value actually utilized in the exchange for the levels of the various criteria sensed. In this way the equipment can be used for any criterion (provided it is impulsive) and for exchanges of any manufacturer without resorting to probes specialized according to the kind of measurement and exchange.

Processing unit UE is the central processing unit of a standard microprocessor such as the Fairchild F8 and is associated with a random-access memory RAM, a read-only memory (ROM) and a group of peripheral units comprising a recoder RG1, a keyboard TA and a printer ST. Block UE incorporates also the interface towards the memories, which is necessary in determined kinds of microprocessors such as the Fairchild F8.

Memory RAM is designed to store both the data and the data processing programs.

As to the data, the memory will comprise:

— an area for each group of wires scanned. In particular the value of threshold voltage, the address of the probe to which the wire is connected, the preceding state, the preceding reading, and the state variation will be memorized for each wire;

— an area for each device, comprising a first part allotted to the processing of the signals arriving from the various wires and a second part acting as a buffer memory for data recording. In the first part there are the words indicating at each new variation the state attained by various wires as a consequence of the various signals arrived, and signalling the segment of program designed to process this new variation, as well as duration measurement data, metering data etc.

In the second part there will be written in readable form the digits, the criteria and the durations, which are transferred into the recorder and possibly to the printer at the end of the event.

As to the programs, RAM normally contains just the program being carried out; sometimes it will store also a debug program.

The use of a random-access memory also for the program being carried out allows interventions both for error correction and for executing modifications required by variations of the operative conditions (e.g. variations of threshold voltage and the like).

Memory ROM contains a program designed to control the load of individual programs into memory RAM.

Recorder RG1, which is of the type using cassette tapes, allows both program loading into RAM and recording of measurement data, read in RAM. The use of a single peripheral unit for both functions helps in keeping the apparatus sizes reduced.

Keyboard TA and printer ST, used for man-machine dialog, are standard and no detailed description is required. The circuits interfacing such devices with the processor are not represented, as they too are standard.

A clock circuit CK times the processing unit operations. A power supply generates all the voltages necessary to the operation of the measuring apparatus, extracting them from the voltage supplied by the exchange battery.

The peripheral units and the digital-to-analog converter are connected to the processing unit by means of conventional input-output gates P1, P2, P3. One of these gates, for instance P1, is also connected to a warning light L1, controllable by UE and used for instance for alarm signals.

A further gate P4, connected to an output bus 1, allows measuring apparatus MPT to be connected to a higher-hierarchy measuring centre (through a modem) for further data processings, or to additional devices for the execution of specific measurements, as will be hereinafter described.

The equipment according to the invention, in the embodiment so far described, is capable of operating on digital criteria.

Fig. 2 shows an embodiment capable of operating on sinusoidal criteria (multifrequency) and on tones.

A certain number of lines $cs_1 \ldots cs_n$ of a telephone exchange CT carrying multifrequency signalling, is connected to a device AM capable of recognizing and converting into digital form the sinusoidal signals and the tones present on the lines. The signals and the tones converted in this way are emitted on wires fs or respectively $t$ (whose number is smaller than that of lines $cs$), and are sent to a number of probes of the measuring apparatus MPT; through other probes, MPT is connected to the control wires associated with lines $cs_1 \ldots cs_n$. On these wires, denoted on the whole by $c$, there are present seizing and answer criteria which are digital and therefore can be directly sent to MPT. Moreover, device AM receives suitable control signals from MPT through a number of wires of bus 1.

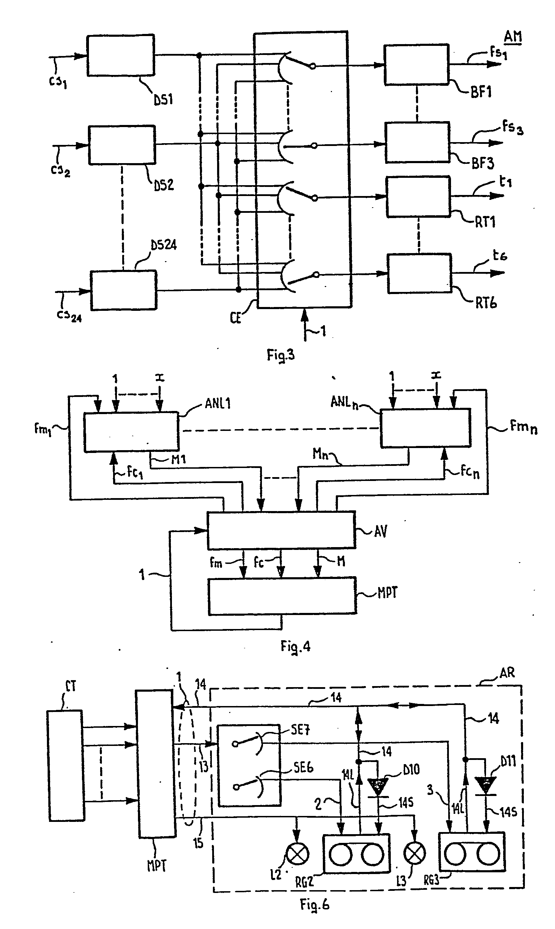

An example of embodiment of AM is represented in Fig. 3. For simplicity of description it will be assumed that AM is capable of controlling 24 lines and of presenting at the same time at the output the signals relating to three of them. An 8:1 concentration as assumed is sufficient to the equipment aims and allows its reduced size to be maintained.

Lines $cs_1 \ldots cs_{24}$ are connected to high-impedance decouplers $DS_1 \ldots DS_{24}$ which allow the extraction of signals from 2-wire or 4-wire lines without disturbing or overloading said lines, and emit the signals on a single wire.

The decouplers can be realized by means of hybrid transformers or even better by operational amplifiers, connected to the lines by RC networks; the advantage of this second solution resides in the more reduced sizes.

The outputs of the 24 decouplers are connected, through a finder stage CE with full availability, to three banks of filters $BF_1 \ldots BF_3$, which are to recognize multifrequency signalling, and to six tone detectors $RT_1 \ldots RT_6$ designed to recognize the ringing or the busy tone. Once the recognition has occurred filter banks BF will emit a digital signal on two out of their twelve outputs (assuming the use of a signalling code with two frequencies, each chosen out of six possible frequencies) denoted as a whole by a single connection $fs_1 \ldots fs_3$. Similarly, the tone detectors will emit a signal on their outputs $t_1 \ldots t_6$ to indicate the recognition of the ringing and busy tones.

The finder stage CE, which is actuated by MPT upon recognition of a seizure, searches for a free bank of filters BF and for a free tone detector RT and connects them to the seized line. The filter bank will remain connected to the line until the end of the multifrequency signalling, and the detector until the recognition of ringing or busy tones, or to the answer or the clearing, if these two events procede the tone recognition.

Filters BF and RT are well known in the art and therefore they do not require any further detail.

By substituting filter banks $BF_1 \ldots BF_3$ by three tone detectors identical to $RT_1 \ldots RT_6$, the circuit of Fig. 3 allows the realization of an additional device for detecting ringing and busy tones from devices with impulsive signalling. The detection occurs as described with reference to Fig. 3.

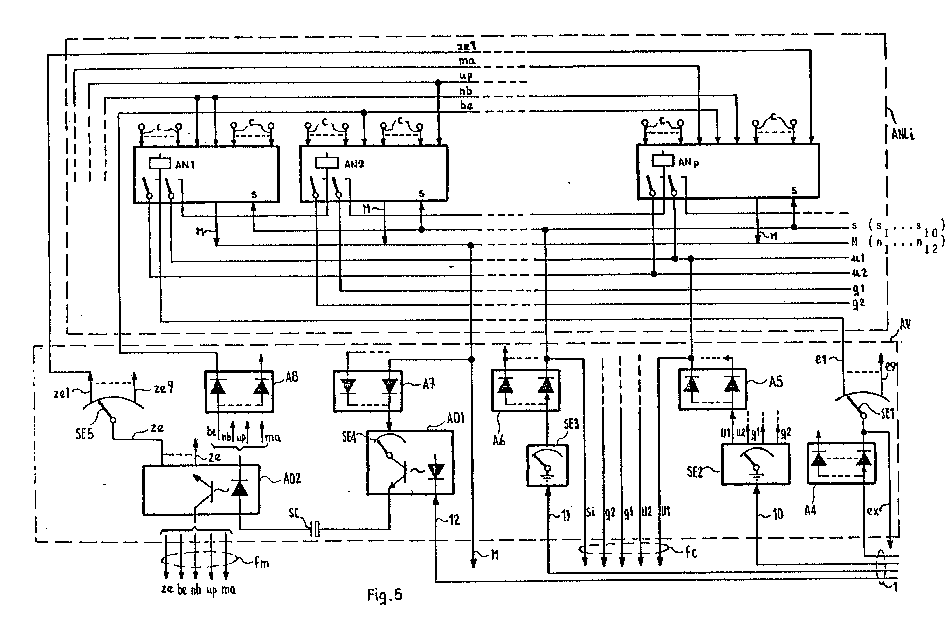

In Fig. 4 and 5 the measuring apparatus MPT is associated with an additional device AV connected to measurement wires, control wires (denoted as wires $e$, $u$, $g$, $s$) and marking wires (referred to as wires $be$, $ma$, $up$, $nb$, $ze$), of a certain number of insertion networks or loops $ANL_1$ ... $ANL_n$ (for instance four) for traffic intensity or availability measuring apparatus of the type known as VGA (Verkehrsgrößen-Abtasteinrichtung) manufactured by Siemens and Halske AG. For sake of simplicity, the marking and control wires of the different loops are shown in the whole as $fm_1$ ... $fm_n$ and respectively $fc_1$ ... $fc_n$; $M_1$ ... $M_n$ denote the measure multiples. The marking and control wires and the measurement multiples of the different loops are connected in parallel, and at the output of AV there is a single group fm, fc of marking and control wires and a single multiple M, with as many wires as $fm_i$, $fc_i$, $Mi$ ($i = 1$ ... n).

Such loops, well known to the person skilled in the art, basically consist of a relay-selector (consisting of coupling relays controlled in groups or strips of ten relays by an insertion relay and comprising 12 contacts) to which there are connected a plurality of seizure wires (numbered by 1 ... x) of the exchange and, in suitable positions, the marking wires; the loops transfer the signals present on said wires onto the measure multiple.

The above mentioned wires have the following functions:

— multiples M1 ... Mn (and hence M), comprising 12 wires (one for each contact of all coupling relays), transfer the criteria to the measuring apparatus;

— wires $e$ ($e_1$ ... $e_9$) distinguish the relay strip where the measurement is to start; as a rule, nine choice possibilities are provided corresponding to as many loop sections;

— wires $s$ ($s_1$ ... $s_{10}$) control the sequential attraction of the relays in a strip;

— wires $u$ ($u_1$, $u_2$) and $g$ ($g_1$, $g_2$) control the attraction and holding of the insertion relays;

— wire $ze$ ($ze_1$ ... $ze_9$) distinguishes the strip where a measuring cycle ends: also this strip can be chosen out of 9 strips, corresponding to the 9 loop sections and depending on the choice made for the cycle start;

— wires $be$, $maa$ identify the end of a group fo devices under test;

— wire $up$ indicates the passage from a kind of device to another one in a group;

— wire $nb$ indicates measurement points in the network, which are not connected to exchange devices.

The various control and marking wires are energized according to the program by the processing unit of the measuring apparatus MPT, through output bus 1, and are also connected to the probes of the measuring apparatus (as shown by wires $fm$, $fc$), together with the wires of measurement multiple M, which are scanned under the control of the processing unit. In this way a check of the loop operation is possible.

Fig. 5 is a partial view of one of the loops ($ANLi$), with a number of insertion relays $AN_1$ ... $AN_n$, their attraction and holding contacts and their connections to the measure, control and marking wires. What expounded is sufficient to the understanding of the invention; greater details on the loop structure can be found for instance in the paper entitled: "Dispositivo per la misura dell'intensità di traffico VGA68" by W. Borissof and R. Rodrian, Telecomunicazioni, n. 30, Marzo 1969.

The additional device AV is designed to amplify and transmit the commands sent from the processing unit to loops ANL. For this purpose there are provided:

— a manually operated selector SE1 per each measurement loop: the fixed contacts of said selector are connected to wires $e_1$ ... $e_9$ identifying the measurement start, and the arm is connected to wire $ex$ of bus 1, which transmits the energization command to the chosen relay (AN1 in the drawing). Wire $ex$ is connected in parallel to all the selectors SE1;

— a selector SE2, to which control wires $u_1$, $u_2$, $g_1$, $g_2$ (multiplied to all the loops) are connected; the arm of selector SE2 sequentially grounds the four wires connected to SE2, upon the commands supplied by the processing unit through connection 10, which is part of bus 1;

— a selector SE3, to which the ten wires $s$ (also multiplied to all the loops) are connected; the arm of SE3 sequentially grounds the ten wires upon commands supplied by the processing unit, through wires 11 of bus 1;

— a first optical coupler AO1, of which the photodiode is connected to a control connection 12 (which is part of the bus 1) while the transistor has its emitter connected to the negative pole of an additional current source SC and the collector connected to the arm of a selector SE4, to which the twelve wires of measure multiple M, connected to all the loops, are linked;

— a group of optical couplers AO2 (only one of them being represented in the drawing), each associated with one of the marking wires: more particularly the diode of each coupler is connected on one side to the positive pole of source SC and on other side to one of the wires, while the transistor is connected to the probes of the measuring equipment to transmit them the criterion present on the respective wire. The wire $be$ (or respectively $ma$, $up$, $nb$) is unique for all the strips in a loop and is multiplied to all the loops; the wire $ze$ (one per each loop) is connected to the arm of a manually operated selector SE5 by which the strip where the cycle is to be stopped may be chosen out of 9 possible strips, as mentioned hereinbefore. The necessary amplifying devices A4 ... A8 are schematically represented by diodes in the drawing.

The operation of device AV is substantially similar to that of the known measuring apparatus, and therefore will not be described further.

The only difference is that the circuits of the marking wires are closed through optical couplers AO1, AO2, instead of being closed through the relays of the conventional VGA, and that the detection of the "probe change" criterion will in fact cause a change in the reference voltage, since the probes of the measurement equipment are "universal".

By the connection to the measuring equipment of Fig. 1 a suitable change of the threshold voltage allows not only a distinction between free and seized wires (i.e. a distinction between earth and battery voltage), but also the recognition of non-available wires, on which no one of the two mentioned voltages will be present.

In addition, the time taken for data recording can be strongly reduced, due to greater speed of the cassette-recorder wth respect to the puncher of the VGA: the time spared in this way allows maximum dimensions envisaged till now for the insertion networks to be exceeded without information losses. Besides, the association with a programmed processing unit allows increased flexibility in the organization of the measurement points and allows also the acquisition of real-time information on particularly important groups.

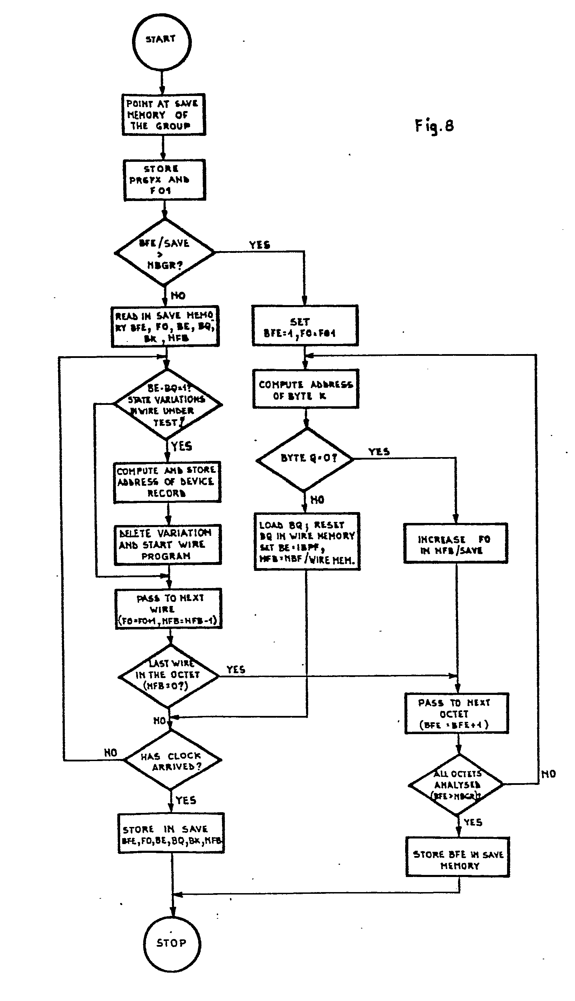

In Fig. 6 bus 1 of the measuring equipment is shown to be connected to an additional device AR, comprising a number of cassette recorders, (e.g. two recorders RG2, RG3) designed to operate when the capacity of recorder RG1 (Fig. 1) of the measuring apparatus MPT is exhausted. In this way continued recordings of a large amount of data can be made. The two recorders RG2, RG3 are connected through control connections 2, 3 to respective selectors SE6, SE7 connected to the processing unit UE (Fig. 1) through a group of wires 13 of bus 1, on which there are present both the actual control signals of the recorders, and the actuation signal for one of them. The data to be recorded onto or the data read from the tape are present on a second group of wires 14, which is splitted into two subgroups inside the device AR, to form reading wires 14L and writing wires 14S. This splitting is schematized by diodes D10, D11.

Signalling lamps L2, L3, controlled by UE through wires 15, will be advantageously provided to indicate which recorder is operating.

The first of the additional recorders, e.g. RG2, will be actuated upon command of UE when the capacity of recorders RG1 is nearly exhausted, said exhaustion being recognized for instance by the same processing unit on the basis of the amount of data already transferred onto RG1; similarly when the recording capcity of RG2 is exhausted, RG3 will be acutated; when also the cassette of RG3 is exhausted, RG3 will be actuated; when also the cassette of RG3 is complete RG1 is started again, provided the tape has been replaced.

The operation of the invention will be now described. Once the measuring equipment has been connected to the devices to be controlled, probes SN are cyclically scanned, according to a program memorized in RAM; the signals outgoing from the probes are transferred to the comparator (e.g. in groups of 8, relating to homologous criteria).

The 8 signals extracted are compared in CM with the suitable voltage threshold supplied by UE, and the comparison result is memorized, wire by wire, in the area of RAM allotted to the wires.

This memory area is read, under the control of a second program of the processing unit, in order to search for the logic state variations of the criteria. These variations are then analyzed by the processing unit according to suitable programs typical of each criterion (wire programs), chosen every time depending on the type of measurement to effect: in this way it is possible to measure seizure and conversation durations, to recognize the dialled digits and possibly to count the metering pulses.

Once processed, these data are memorized in the area of RAM associated with the devices, and at the end of an event, they are transferred onto the recorder tape and possibly to the printer together with the identity of the device involved in said event.

The data recorded in this way can be further processed off-line.

By the above information, the embodiment of the invention shown in Fig. 1 allows for instance to make the following measurements:

— traffic measurements according to the destination from which, depending on the seizure duration and on the dialled digits, day and night matrices for local and trunk traffic can be obtained, analyses on holiday traffic, on repeated calls towards the same subscriber, can be made, etc;

— quality analysis on metering pulse generators or on incoming trunks to transit centers;

— analysis of the distribution of seizure durations, that requires the extraction of the same criteria as the traffic measurements according to the destination, and allows the distribution according to destination and origin of the calls to be provided;

— analysis according to rate group, requiring the extraction of four criteria per device (seizure, duration of conversation, dialled digits, metering pulses); from these criteria it is possible to obtain parameters such as ratio between conversation duration DC and number of conversations NC, ratio between number of metering pulses (NI) and number of conversations (NC), ratio between durations of conversation and the number of metering pulses, or distribution per hour of trunk-dialled traffic.

The same measurements can be obviously effected for exchanges with multifrequency signalling, using the additional device AM (Fig. 2). Of course, the use of the additional device allows to extend the range of measurements effected on the devices with impulsive signalling, by detecting ringing and busy tones; this allows subscribers which are often absent or busy to be identified.

Finally, the provision of device AV allows traffic intensity measurements as well as availability measurements to be effected, as mentioned hereinbefore.

For a better understanding of the invention, the organization of the memory areas associated with the wires (wire memory) and of the areas allotted to the devices (device-record) is described. The abbreviations used for the description of the memory are also used for the annexed flow charts.

The memory area allotted to the wires is subdivided into subareas allotted to each group of wires (the term group denoting the whole of the homogeneous wires of the devices connected to the measuring equipment) and the subarea allotted to each group contains a number of words (wire bytes) which "describe" the octets of wires explored at the same time.

Such words are as follows:

| | |
|---|---|
| TEN: | threshold voltage, identical for all the 8 wires; |
| MUX: | address of the 8 probes associated with the wire octet; |
| C: | word in which each bit is associated with a wire and denotes the state of the preceding reading of said wire; |
| K: | word in which each bit is associated with a wire and represents its logic state, as recognized by the scanning program; |
| Q: | word in which each bit is associated with a wire and represents the occurred variation of logic state; |
| MSO: | word in which the bits indicate, for each wire, whether the logic state of the analysed signal is 1 (valid) above or under threshold voltage TEN; |
| MAND: | word in which each bit is associated with a wire and in which the bits at 0 mask the wires not to be analysed; |
| IBPF: | word containing an only bit at 1, which indicates in the wire-byte the beginning of the first wire analysed; |
| NFB: | word which indicated how many wires of the octet are to be analysed. |

For each group of wires, the description of the octets is preceded by a group of words indicating the type of wire examined and the number of octets; in addition a number of words are provided, which reproduce the content of the "descriptive" part and serve for the program of variation analysis as "saving area" in case the program is interrupted.

In the whole, the organization of the wire memory for a group of wires is as follows:

| | |
|---|---|
| —: | code of the group of wires; |
| PRGFX: | address of the wire program (2 words); |
| BFE: | identity of the wire byte under test; |
| FO: | number of wire/device (identity of the wire and of the device under test); |
| BE: | bit under test in the wire byte; |
| BQ: | word Q under test; |
| BK: | word K under test; |
| NFB: | number of wires to be analyzed in the octet; |
| NBGR: | number of octets in the group; |
| — | description of the octets (ten words per octet). |

The words from BFE to NFB form the "saving area" which is also referred to as "SAVE MEMORY".

The "device record" comprises, as mentioned, two equal parts which serve respectively to process signals arriving from the various wires of the devices and as buffer for the recording.

The first part of the "device record" contains the "state bytes", one per each wire, indicating the state attained by the wire as a consequence of the signals arrived to a determined instant. Said state bytes indicate to the respective wire program which program segment or routine is to process a new change, such segment will update the state byte in view of the processing of the next variation.

In addition to the "state bytes", the device record contains other words which serve to memorize the instants of occurrence of signal variations, as digit counters, pointers for writing in the second part of the record, etc., as well as a "data area" into which the processing results are memorized.

As a whole, if signals on seizure, answer and selection wires are analysed, the organization of the device record can be as follows:

| | |
|---|---|
| SEL: | state byte of selection wire; |
| TSEL: | words for recording the time instants relating to the selection; |
| IMP: | state byte of the seizure wire; |
| TIMP: | words for recording instants and durations relating to seizure; |
| RISP: | state byte of the answer wire; |
| TRISP: | words for recording instants relating to the answer and durations of conversation; |
| CNIS: | counter of the number of pulses to be processed on the answer wire; |
| PRISP: | word indicating the occurred answer and the position of the answer character in the "data" area; |

NSB:     number of semibytes recorded in the data area;

EC:     digit processing (counter of the dialling pulses);

PCTR:     position of the check byte of the occurred data transfer into the recorder buffer;

NORG:     number of the involved device;

DO:     seizure duration;

CIFRE:     words for recording the dialled digits and the signals preceding the end-of-selection (each dialled digit requires half a byte);

R:     answer character recorded after the digits;

DC:     duration of conversation;

CTR:     check byte of the occurred data transfer.

The words from NORG to CTR form the "data area" whose actual length will obviously depend on the number of bytes and half-bytes CIFRE; hence the necessity of words PRISP, NSB, PCTR indicating the position of determined characters.

Word CNIS takes into account that, depending on the kind of exchange, a different number of signals may be present on the answer wire before the actual end-of-selection and answer criteria.

The annexed flow-charts will be now explained, which describe the programs relating to wire scanning, variation analysis, seizure, selection and answer processing.

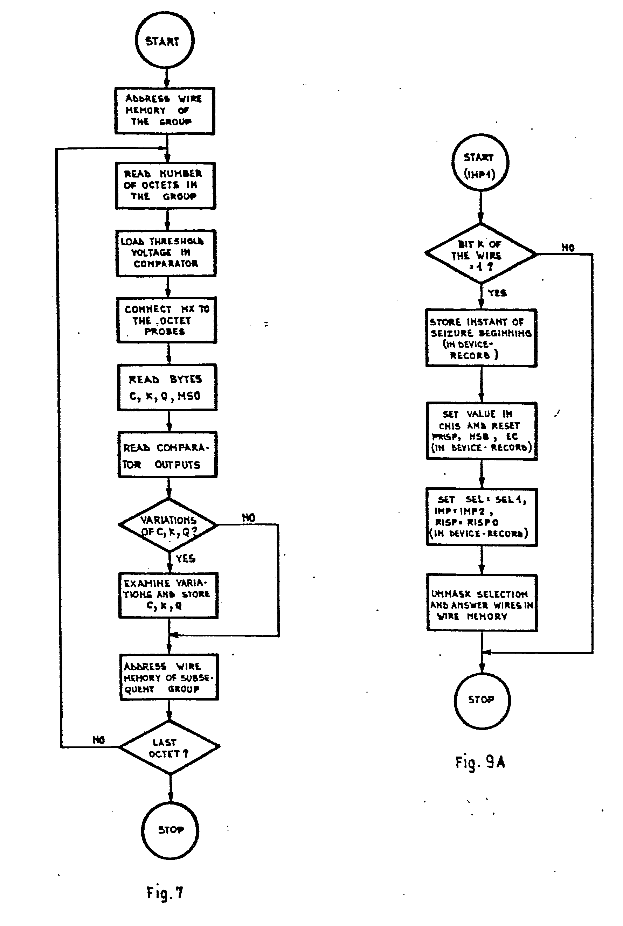

1) *Wire scanning* (Fig. 7)

The program is designed to generate in the memory a first time replica of the logic signals present on the wires, and a second replica in which state variations of said signals are signalled; as it is usual in the telephone-data processing a variation is "accepted" after the new state has been present for a number of successive readings (for instance 2) so that a distinction can be made between actual state variations and noises. This program is identical for all the wire groups.

The flow chart is self-explanatory and needs no detailed description; it is to be noted that wire scanning is periodically performed and that once it has been started, it continues till all the wires of a group have been scanned; the "start" and "stop" of the flow chart of Fig. 7 refer to the "start" and "stop" of the scanning of a group of wires, and the described operations are repeated for the other groups.

2) *Variation analysis* (Fig. 8)

This program must detect in the wire memory the state variation and start the so-called wire programs, i.e. the programs for processing the various criteria. To be performed, it requires the address of wire memory of the group to test together with the starting address of the routines of the wire program started by a variation. As this program can be interrupted by clock signals, it will access the "save area" of the wire memory to record the state attained at the interruption instant.

Therefore, whenever the program is started, it must check whether some analysis is to be completed (check effected by comparing whether the number of the octet under test recorded in the save area is higher than the number of octets in the group). After this check the analysis of a new group of wires will be started, if no analysis was incomplete, or the analysis of the preceding group is completed, if some operation was pending. After each wire prcoessing, the possible clock arrival will be checked, to store into the SAVE area all the parameters of the analysis in progress. Only the identity of the last octet will be memorized into the save area when all octets have been examined.

The other program steps do not require further explanation and are made apparent from the flow chart.

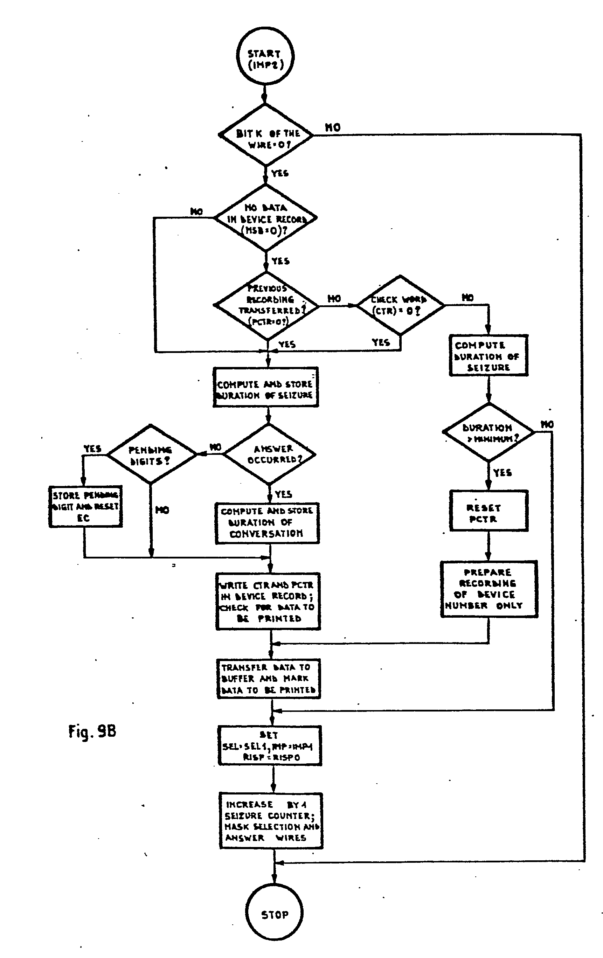

3) *Seizure* (Fig. 9)

The program for processing the seizure comprises two routines corresponding to the beginning-of-seizure (starting state IMP1, Fig. 9A), and end-of-seizure (starting state IMP2, Fig. 9B).

As to the processing of the beginning of seizure, it can be noted that: the check on the value of bit K allows recognition of whether the variation actually is due to a new seizure and not to the end of a seizure already existent at the beginning of the measurement; the reset of words NSB, PRISP ad EC takes into account the fact that the beginning-of-seizure is the first event examined for a device; as a consequence of the occurred seizure, the selection and answer wires relating to the device are "unmasked" (setting to / the relative bit MAND in the wire memory) and the state bytes of the seizure, selection and answer wires are updated so that their first state variation may be processed. More particularly the following conditions will be set:

SEL1:     beginning of the first dialling pulse,

IMP2:     end-of-seizure,

RISPO:     beginning of answer.

It is to be appreciated that in this program, as in all the other wire programs, the "stop" corresponds to the return to the variation analysis program.

In the processing of the end of seizure, after the check on the state of bit K, executed for the same reasons seen for the beginning of seizure, the value of the words NSB (number of recorded digits or signals) and PCTR (execution of the transfer of the previous recording to the buffer) is checked in the device. The absence of digits or signals allows the recognition of unsuccessful seizures; if signals or digits are absent and the transfer has not been effected, only the number of the device is recorded, to indicate overlaps. The recording is not made for seizures whose durations are shorter than a minimum duration.

Under normal conditions (i.e. if there are recorded digits and the transfer of the preceding recording has occurred) the seizure durations are determined and it is checked whether the seizure has originated the answer criterion: in the affirmative the call duration is computed and recorded, while in case of lack of answer it is necessary to ascertain whether in EC there is a digit still unrecorded. In fact, it is possible that the last arrived digit is still being processed in byte EC.

Now the exact record length is known and control byte CTR and its position in the record PCTR are stored as recording end. Such indications will allow, at the next seizure, the recognition of the occurred transfer of the recorded data to the second part of the device-record.

A suitable marking will distinguish the data to be only transferred to the recorder from those to be also printed.

Before the program end, the state bytes of the three wires are reset to initial conditions, the counter of the seizures belonging to UE (Fig. 1) is incremented, and in case of lack of answer, the selection and answer wires are masked again. If the answer has arrived, masking is carried out by answer processing program.

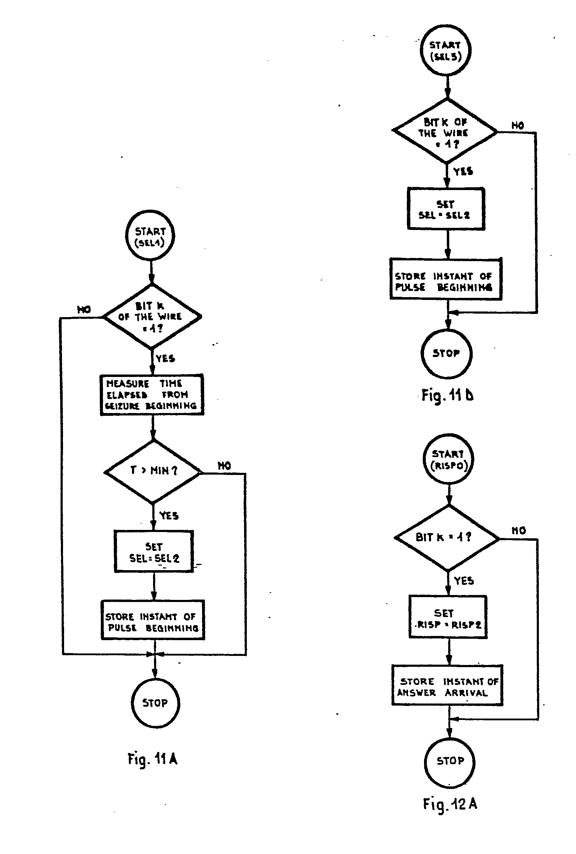

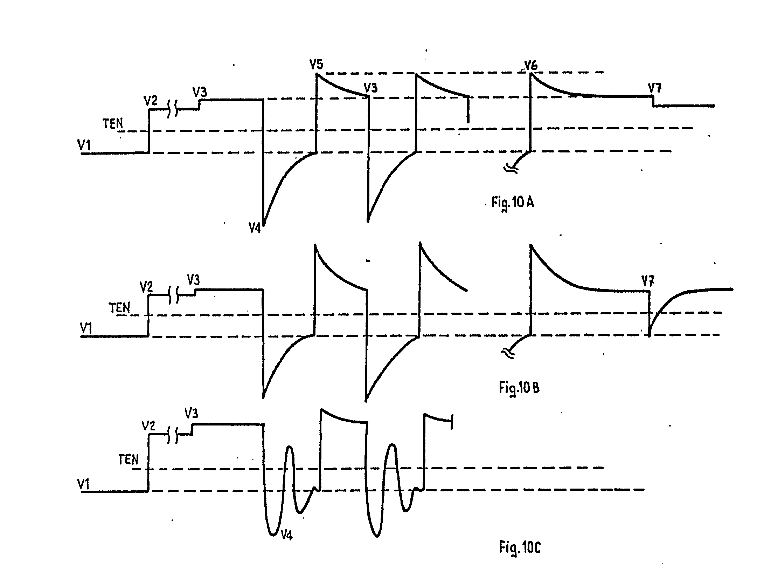

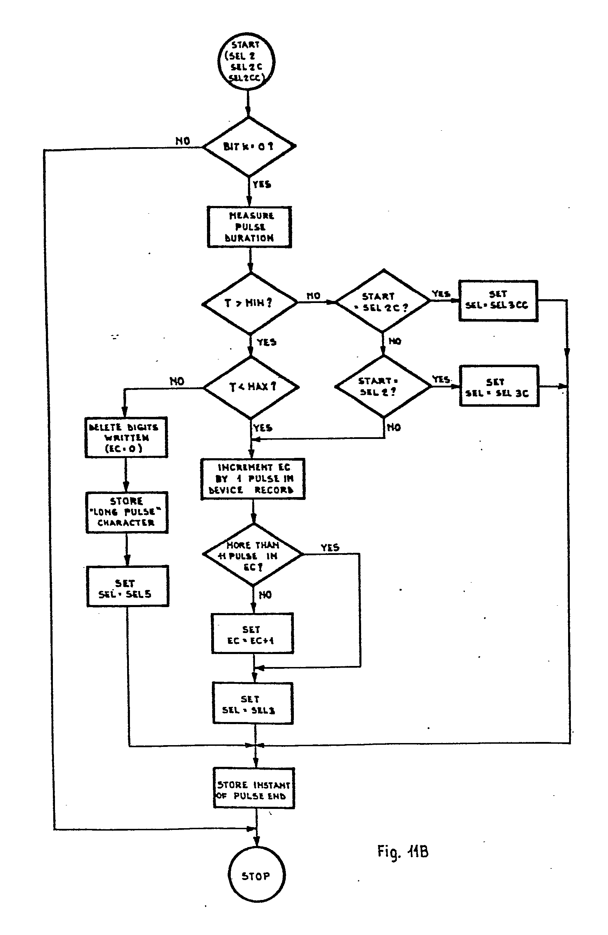

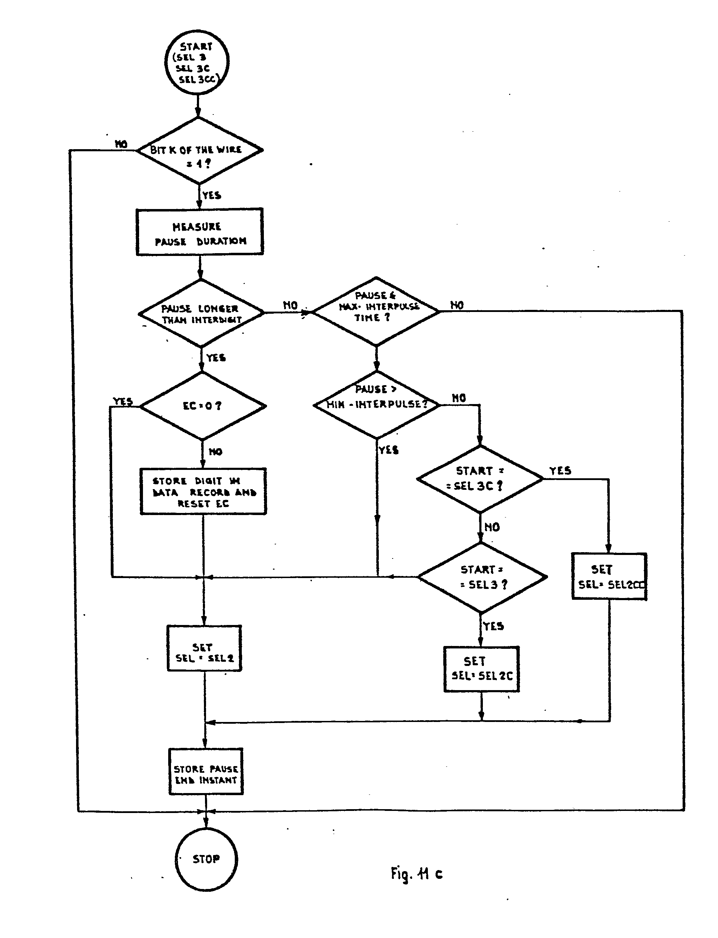

### 4) *Selection* (Figures 10, 11)

The selection processing program consists of 4 routines corresponding to different events requiring a different processing; in particular there are routines for processing the first pulse after the seizure (routine beginning with SEL1, Fig. 11A), for processing the pulse end and the pause beginning (SEL2, 2C, 2CC, Fig. 11B) for processing the pause end and the pulse beginning (SEL3, 3C, 3CC, in Fig. 11C) and for processing the beginning of a first pulse after a long pulse (SEL5, Fig. 11D). The three possibilities for the start of the second and third routines (SEL2, 2C, 2CC and SEL3, 3C, 3CC) correspond respectively to a regular selection (SEL2, 3) and to two kinds of noises, namely a spurious pulse after the last dialled digit, due in particular to the presence of the inductive translator at the subscriber's side in case of private branch exchange, and spurious pulse oscillations due to particular combinations of the line and of the pulsing relays originating a resonant circuit. In particular SEL 2C indicates that the pulse examined was preceded by a short pause, and SEL 2CC that said short pause was preceded by a short pulse; analogously SEL 3C indicates that the last received pulse was short, and SEL 3CC that such short pulse followed a short pause.

The conditions of regular selection and the two noises are depicted respectively in Figures 10A, 10B, 10C. There TEN denotes the threshold voltage, $v_1 \ldots v_7$, the loop conditions corresponding to open circuit, unhooking, dial winding, beginning of pulse, end of pulse, end of dialled digit, end of dial winding (it is worth noting that the voltage corresponding to the end-of-pause is equal to the voltage at the end of the dial winding and therefore has also been denote by $v_3$; besides, even if denoted by a different reference, the condition of end of dialled digit is equal to that of any pulse end); the anomalies are represented by the spurious pulse at point $v_7$ (Fig. 10B) and by the broken pulse in $v_4$ (Fig. 10C).

That being stated, in all the routines a check is made on the congruence of the variation noted with the wire state.

As to the beginning of the first pulse after the seizure (SEL1) it is just to be noted that this pulse is accepted as beginning-of-selection only if the time passed from the seizure beginning is longer than a minimum; in this way noises present at the seizure beginning can be eliminated.

For processing the pulse beginning, the three starts denote the conditions occurred in the previous pulse or pause and allow the noise of Fig. 10C to be filtered. In particular the pulse duration is computed as difference with respect to the previous event, processed by SEL1 or SEL3 depending on whether the examined pulse is or is not the first. Depending on the durations a distinction can be made among short pulses, i.e. pulses shorter than or equal to a minimum (e.g. 25 ms), long pulses, e.g. pulses longer than or equal to a maximum (e.g. 85 ms), and regular pulses in the remaining cases. The long pulse causes the reset of the pulse counter (i.e. it sets to 0 byte EC), the recording of a special character C, and the setting of the state byte to SEL5. In SEL5 the arrival of a possible new pulse is waited for. When this pulse arrives (i.e. bit K = 1), the state byte is set to condition SEL2 and the instant of pulse beginning is recorded.

The short pulse sets the state byte to SEL3C if the routine had started from SEL2, or to SEL3CC if the routine had started from SEL2C; the regular pulse causes the digit processing (increment of the corresponding byte with stop at the eleventh pulse) and then the setting of the state byte to SEL3 (for processing the subsequent pulse.

Also for processing the end-of-pause, three starts are possible corresponding to the possible interruptions of the normal pause ($v_4$, Fig. 10C), as for the pulse, depending on the duration measurements (difference between the instant of end-of-pulse/beginning of pause, and the instant of end-of-pause/beginning-of-pulse) the pauses are classed as short pauses (e.g. $\leqslant 25$ ms), interimpulse or regular pauses (e.g. $> 25$ ms and $\leqslant 80$ ms), anomalous pauses ($> 80$ ms and $\leqslant 300$ ms), and interdigital pauses ($> 300$ ms). The short pauses are processed like the short pulses, the interimpulse pause causes the passage to state SEL2 where the pulse-end is waited for; the interdigital pause causes recording to the dialled digit upon check of byte EC; finally the anomalous pause is interpreted as an interdigital pause interrupted by a spurious pulse (Fig. 10B); in this case the pulse is eliminated because the wire state does not change and then the subsequent pulse end is eliminated by the congruence check of routine SEL3. At the end of each event the anomalous pause excepted, the instant of occurrence is stored for computing the pulse duration.

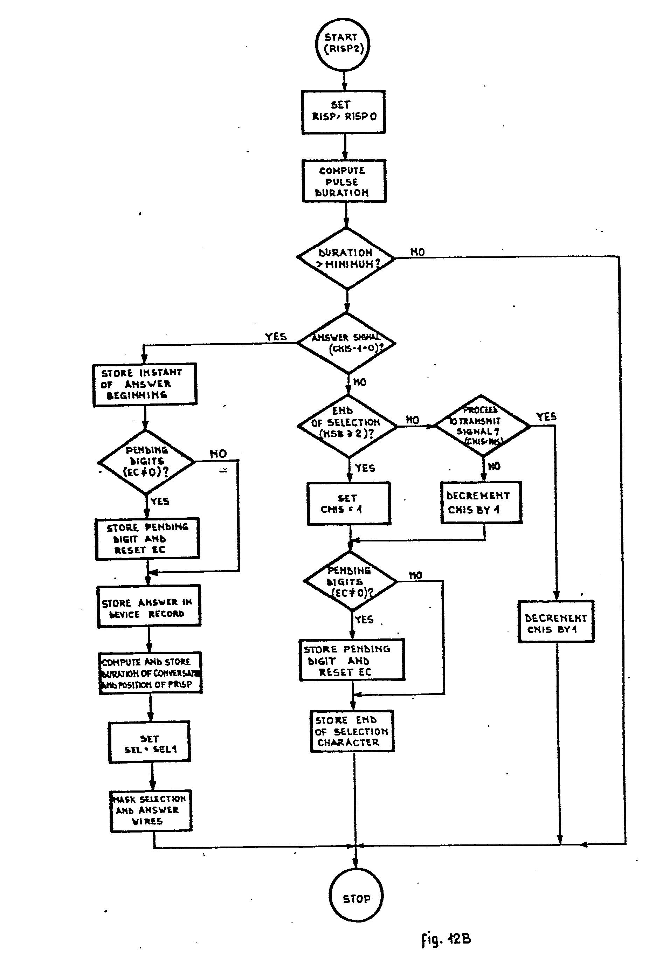

5) *Answer* (Fig. 12)

This program comprises a routine for the pulse beginning (starting state RISP0) and one for the pulse end (starting state RISP2); besides the seizure processing program is required to set in the device-record the counter CNIS to value NIS indicating the maximum number of pulses to be processed on the answer wire.

The "pulse beginning" program does not require any explanation.

As to the pulse end, as soon as it is recognized, the state byte is set to condition RISP 0 (wait for answer) and the pulse duration is computed, which must be longer than a minimum for the pulse to be valid. According to the value marked by CNIS the arrived pulse is interpreted as an answer (CNIS = 1, that is last pulse waited for), end of selection (if CNIS $\neq$ 1 and two digits or signals at least are stored in the record), first pulse (if the check on the answer and the end-of-selection had negative result, the value of CNIS is checked to verify whether the pulse is the first of a series), other pulses (if none of the previous conditions occurs).

The different branches of the program do not require further explanations; it will be only noted that: once a recognized answer has been processed, answer and selection wires are masked again; upon recognition of the end of selection the subsequent pulse on the same wire is automatically considered as an answer and the "other pulses" require only the counter decrement: in both cases for each pulse a character indicating the end of dialling and the possible pulses present between the answer and the end of selection will be stored.

It is also to be noted that, if in counter CNIS a value 3 or 4 is set, it is possible to face all cases in which the end-of-selection and answer signals are present on the wire, independently of whether or not the "proceed to send" signal is transmitted; a value 2 allows the case of presence of the "proceed to send" and answer signals to be faced and a value 1 allows the case of the answer only to be faced. Obviously the number to set is known "a priori" depending on the kind of exchange.

It is clear that what described has been given only by way of example and not in a limiting sense and that variations and modifications are possible without going out of the scope of the invention.

## Claims

1. Programmable telephone-traffic measuring equipment to be connected to an exchange for cyclically extracting from exchange devices (OC1, OC2, ..., OCn) samples of signalling criteria of different natures, processing said samples and issuing traffic data, said measuring equipment comprising a measuring apparatus which contains: extracting means (SN, MX) extracting the samples and comprising a plurality of probes (SN) each connected to a wire (cd1, ..., cdn), each of which is connectable to one measuring point in the plurality of exchange devices (OC1, OC2, ..., OCn) for carrying one of the criteria in form of an impulsive voltage, each probe being designed for bringing the impulsive voltage level to values comprised within an interval suitable for the further processing, and further comprising a multiplexer (MX) the inputs of which are connected to the outputs of the probes (SN); a comparator (CM) receiving at its inputs for comparison the outputs of the multiplexer and a threshold value and indicating by its own output signal, wire by wire, the higher-lower-relation of its associated input values; and a stored-program processing unit (UE) processing the data represented by said criteria and being supplemented by memory means (RAM, ROM) for storing the program and the processed data, characterized in that the probes (SN) are composed of voltage dividers identical to each other and operating according to the same voltage reduction ratio irrespective of the criterion being sensed, and the input supplying the threshold value to the comparator (CM) is connected to a variable value generator (CNA) the output value of which is determined by the processing unit (UE) depending on the nature of the criterion.

2. Measuring equipment according to claim 1, characterized in that the multiplexer (MX) presents towards the comparator (CM) a multiple output connected to a first group of inputs of the comparator for sending to the comparator the voltages outgoing from an equal number of probes, the comparator receiving the threshold values at a second group of inputs, comparing them with the single voltages present at its first group of inputs and sending to the processing unit (UE) the bits indicating the criterion states by groups.

3. Measuring equipment according to claim 1 or 2, characterized in that the comparator (CM) is an analog comparator receiving the samples in analog form and receiving as threshold value an analog reference voltage generated by a digital-to-analog converter (CNA) the input of which is coupled to the processing unit (UE).

4. Measuring equipment according to any of claims 1 to 3, characterized in that the multiplexer (MX) is directly controlled by the processing unit (UE) as concerns both the wire group selection and the scanning periodicity.

5. Measuring equipment according to any of claims 1 to 4, characterized in that the processing unit (UE) is programmable and the memory means comprise a random-access memory (RAM) which stores in a first area, associated to the wires (cd1, cd2, ... , cdn), the unprocessed data relevant to the state of the wires, in a second area, associated to the exchange devices (OC1, OC2, ... , OCn), the processed data relevant to the individual exchange devices, and in a third area the program being carried out, said second area acting also as a buffer memory in view of the transfer of the processed data to a recorder (RG1) used also to load in said random-access memory (RAM) the program to be carried out.

6. Measuring equipment according to claim 5, characterized in that the memory means comprise also a read only memory (ROM) associated with the processing unit (UE) and containing a program controlling the loading of the programs into the random-access memory (RAM).

7. Measuring equipment according to any one of claims 1 to 6, characterized in that said processing unit (UE) presents an output bus (1) through which the measuring equipment can be supplemented by additional devices (AM, AV, AR) to effect particular measurements and/or by a modem for data transmission to a higher hierarchy processing unit.

8. Measuring equipment according to claim 7, characterized in that said additional devices comprise at least: a device (AM) for executing measurements starting from sinusoidal signalling criteria and/or tones; a device (AV) for extracting criteria from insertion networks (ANLi) for traffic measuring, consisting of a relay selector which transfers on a measure multiple the signals present on seizure wires or marking criteria indicating unconnected measure points, change of type of exchange device, end of a group of exchange devices and end of a measurement cycle; and a device (AR) to execute continued recordings of large amounts of data.

9. Measuring equipment according to claim 8, characterized in that the device (AM) for executing measurements starting from sinusoidal criteria and/or tones comprises a plurality of high-impedance decouplers (DS1, ... , DS24) for the extraction of criteria and/or tones from the lines where they are present, a group of filter banks (BF1, ... , BF3), in reduced number with respect to the decouplers, apt to recognize signalling frequencies, to convert into impulsive form the sinusoidal criteria and to supply the corresponding impulsive signals to the probes (SN) of the measuring apparatus (MPT), and a group of tone detectors (RT1, ... , RT6) apt to recognize and convert into inpulsive form the tones, and to send the corresponding impulsive signals to the probes (SN) of the measuring apparatus (MPT), and in that between the filter banks (BF1, ... , BF3) and the tone detectors (RT1, ... , RT6) on the one side and the decouplers (DS1, ... , DS24) on the other side, a finder stage (CE) with full availability is inserted, that on the basis of control signals supplied by the processing unit (UE) upon the recognition of a seized line, connects the decoupler associated with said line to a free filter bank and a free tone detector, the .connection to the filter bank being maintained to the end of the sinusoidal signalling, and the connection to the detector being maintained to the recognition of the ringing or busy tone, or to the answer or the clearing if these events precede the tone.

10. Measuring equipment according to claim 8 or 9, characterized in that said device (AV) for extracting criteria from insertion networks (ANLi) for traffic measuring is connected to a plurality of said insertion networks and comprises:

— a first selector (SE1) for each insertion network, which is manually operated and is connected through its fixed contacts to wires $(e_1, ... , e_9)$ which identify the starting point of the measurement, and has its arm connected to a wire $(e_x)$ of said bus (1) through which it receives from the measuring apparatus the command of measurement start, said wire being connected to the first selector (SE1) of all insertion networks;

— a second selector (SE2) and a third selector (SE3) for each insertion network, which are apt to sequentially ground the insertion network control wires to cause the progressive insertion network actuation, said second and third selectors being connected to the measuring apparatus through connections (10, 11) of said bus (1);

— a first optical coupler (AO1), comprising a photodiode connected to a control connection (12) pertaining to said bus (1), and a transistor with the emitter connected to an additional current source (SC) and the collector connected to the arm of a fourth selector (SE4), to which the measure multiple (M) is connected in parallel for all the insertion networks;

— a group of optical couplers (AO2), each comprising a photodiode and a phototransistor and being allotted to one of the marking criteria, in which couplers the photodiode is connected to the additional current source and to a wire which transfers the criterion to the insertion network, the diode of the coupler relevant to the criterion of end of cycle being connected through a fifth selector (SE5), manually operated, which is positioned on one out of a plurality of wires of end of cycle, in a way dependent on the position of the first selector (SE1).

11. Measuring equipment according to claim 10, characterized in that on the control wire of said first selector (SE1) and on the output wires of said second and third selectors (SE2, SE3) amplifying means for the signals present on said wires are provided, the outputs of the amplifying means being also connected to the probes (SN) of the measuring apparatus (MPT), to allow a check of the regular operation of the insertion network.

12. Measuring equipment according to claim 10 or 11, characterized in that in each optical coupler (AO2) of said group the transistor has its coupler connected to the probes of the measuring apparatus (MPT) to allow a check on the regular sending of the marking criteria.

13. Measuring equipment according to any of claims 8 to 12, characterized in that said additional device (AR) for effecting continued recordings of large amounts of data comprises one or more cassette tape recorders (RG2, RG3) which receive from the measuring apparatus (MPT) the actuation signals, commands and data to be recorded, and transfer the recorded data to the measuring apparatus (MPT) through wires of said bus (1), the recorder or each recorder of said device being actuated when the processing unit (UE) detects the exhaustion of the capacity of the recorder (RG1) of the measuring apparatus or respectively of another recorder of the additional device (AR).

**Revendications**

1. Equipement de mesure de trafic téléphonique programmable, à connecter à un central pour saisir cycliquement d'organes de central (OC1, OC2 ... OCn) des échantillons de critères de signalisation de nature différente, traiter ces échantillons et fournir des données de trafic, l'équipement de mesure comprenant un dispositif de mesure qui comprend: des moyens de saisie (SN, MX) qui saisissent les échantillons et comprennent une pluralité de sondes (SN) dont chacune, est associée à un fil ($cd_1$ ... $cd_n$) connectable à un point de mesure dans la pluralité d'organes de central (OC1, OC2 ... OCn) pour délivrer un des critères sous forme d'un signal impulsif de tension, chaque sonde étant en mesure de réduire le niveau de la tension impulsive à les valeurs comprises dans une plage convenable pour le traitement ultérieur, les moyens de saisie comprenant également un multiplexeur (MX) dont les entrées sont connectées aux sorties des sondes (SN); un comparateur (CM) qui reçoit à ses entrées, pour les comparer, les sorties du multiplexeur et une valeur de seuil, et dont le signal de sortie indique, pour chaque fil, la rélation ''supérieure-inférieure au seuil'' des valeurs d'entrée associées; une unité de traitement à programme enregistré (UE) pour le traitement des données représentées par lesdits critères, associée à des moyens de mémoire (RAM, ROM) pour la mémorisation des programmes et des données traitées, caractérisé en ce que les sondes (SN) sont formées par des diviseurs de tension identiques qui travaillent selon le même rapport de réduction indépendamment du critère saisi, et l'entrée du comparateur (CM), où la valeur de seuil est présente, est connectée à un generateur (CNA) d'une valeur variable, dont la valeur de sortie est déterminée par l'unité de traitement (UE) d'après la nature du critère.

2. Equipement de mesure suivant la revendication 1, caractérisé en ce que le multiplexeur (MX) comporte, vers le comparateur (CM), une sortie multiple connectée à un premier groupe d'entrées du comparateur (CM) pour y envoyer les tensions sortant d'autant de sondes, le comparateur recevant les valeurs de seuil à un second groupe d'entrées, comparant les seuils avec les tensions individuelles présentes au premier groupe d'entrées et délivrant à l'unité de traitement (UE), par groupes, les bits indiquant l'état des critères.

3. Equipement de mesure suivant la revendication 1 ou 2, caractérisé en ce que le comparateur (CM) est un comparateur analogique qui reçoit les échantillons sous forme analogique et reçoit, comme valeur de seuil, une tension de référence analogique en gendrée par un convertisseur numérique — analogique (CNA) dont l'entrée est connectée à l'unité de traitement (UE).

4. Equipement de mesure suivant l'une quelconque des revendications de 1 à 3, caractérisé en ce que le multiplexeur (MX) est contrôlé directement par l'unité de traitement en ce qui concerne la sélection du groupe de fils aussi bien que la périodicité d'exploration.

5. Equipement de mesure suivant l'une quelconque des revendications de 1 à 4, caractérisé en ce que l'unité de traitement (UE) est programmable et les moyens de mémoire comprennent une mémoire vive (RAM) qui emmagasine dans une première zone, associée aux fils ($cd_1$, $cd_2$ ... $cd_n$) les données non traitées relatives à l'état des fils, dans une deuxième zone, associée aux organes de central (OC1, OC2 ... $OC_n$), les données traitées relatives aux organes de central individuels et dans une troisième zone le programme en cours d'effectuation, ladite deuxième zone agissant aussi en mémoire tampon en vue du transfert des donneées traitées à un enregistreur (RG1) utilisé aussi pour introduire dans ladite mémoire vive (RAM) le programme à effectuer.

6. Equipement de mesure suivant la revendication 5, caractérisé en ce que les moyens de mémoire comprennent aussi une mémoire morte (ROM) associée à l'unité de traitement (UE) et contenant un programme qui gère l'introduction des programmes dans la mémoire vive (RAM).

7. Equipement de mesure suivant l'une quelconque des revendications de 1 à 6, caractérisé en ce que ladite unité de traitement (UE) présente un bus de sortie (1) à travers lequel l'équipement de mesure peut être complété par des organes auxiliaires (AM, AV, AR) pour effectuer des mesures particulières, et/ou par un modem pour la transmission des données à une unité de traitement de niveau hiérarchique supérieur.

8. Equipement de mesure suivant la revendication 7, caractérisé en ce que lesdits organes auxiliaires comprennent au moins: un organe (AM) pour effectuer des mesures à partir de critères de signalisation sinusoïdaux et/ou de tonalités; un organe (AV) pour saisir des critères de réseaux d'insertion (ANLi) pour des mesures de trafic, constitués par un sélecteur à relais qui transfère sur un multiple de mesure les signaux présents sur les fils de prise ou des critères de marquage identifiant des points de mesure non connectés, le changement du type d'organe de central, la fin d'un groupe d'organes de central et la fin d'un cycle de mesure; un organe (AR) pour l'enregistrement continu de grandes quantités de données.

9. Equipement de mesure suivant la revendication 8, caractérisé en ce que l'organe (AM) pour effectuer des mesures à partir de critères sinusoïdaux et/ou de tonalités comprend une pluralité de découpleurs à haute impédance (DS1 ... DS24) pour la saisie des critères et/ou des tonalitées des lignes où ils sont présents, un groupe de bancs de filtres (BF1 ... BF3), en nombre réduit par rapport au découpleurs, aptes à reconnaître les fréquences de signalisation, à convertir sous forme impulsive les critères sinusoïdaux et à fournir les signaux impulsifs correspondants aux sondes du dispositif de mesure (MPT), et un groupe de détecteurs de tonalités (RT1 ... RT6) aptes à reconnaître et à convertir sous forme impulsive les tonalités et à envoyer les signaux impulsifs correspondants aux sondes (SN) du dispositif de mesure (MPT); et en ce qu'entre les bancs de filtres (BF1 ... BF3) et les détecteurs de tonalités (RT1 ... RT6) d'un coté, et les découpleurs (DS1 ... DS24) de l'autre, il y a un étage de recherche (CE) à accessibilité complète qui, sur la base de signaux de commande fournis par l'unité de traitement (UE) d'après la détection d'une ligne prise, connecte le découpleur associé à une telle ligne à un banc de filtres libre et à un détecteur de tonalités libre, la connexion avec le banc de filtres étant maintenue jusqu'à la fin de la signalisation sinusoïdale, et la connexion avec les détecteurs étant maintenue jusqu'à la détection de la tonalité de retour d'appel ou d'occupation, ou jusqu'à la réponse ou à la fin, si ces évents précèdent la tonalité.

10. Equipement de mesure suivant la revendication 8 ou 9, caractérisé en ce que ledit organe (AV) pour la saisie de critères de réseaux d'insertion (ANLi) pour des mesures de trafic est connecté à une pluralité desdits réseaux d'insertion et comprend;

— un premier sélecteur (SE1) pour chaque réseau d'insertion, qui est actionné manuellement, est connecté par ses contacts fixes aux fils ($e_1$ ... $e_9$) qui identifient le point initial de la mesure, et comporte un bras connecté à un fil ($e_x$) dudit bus (1) à travers lequel il reçoit du dispositif de mesure la commande de commencement de mesure, ledit fil étant connecté au premier sélecteur (SE1) de tous le réseaux d'insertion;

— un deuxième et troisième sélecteur (SE2, SE3) pour chaque réseau d'insertion, aptes à connecter à terre en séquence les fils de commande du réseau d'insertion pour l'activation progressive du réseau d'insertion, lesdits deuxième et troisième sélecteur étant connectés au dispositif de mesure à l'aide de connexions (10, 11) dudit bus (1);

— un premier coupleur optique (AO1), qui comprend une photodiode connectée à une connexion de commande (12) faisant partie dudit bus (1) et un transistor ayant l'émetteur connecté à une source de courant auxiliaire (SC) et le collecteur connecté au bras d'un quatrième sélecteur (SE4), auquel le multiple de mesure (M) est connecté en parallèle pour tous les réseaux d'insertion;

— un groupe de coupleurs optiques (AO2), dont chacun comprend une photodiode et un phototransistor et est assigné à l'un des critères de marquage, et dans lesquels la photodiode est connectée à la source de courant auxiliaire et à un fil qui délivre au réseau d'insertion le critère, la diode du coupleur relatif au critère de fin de cycle étant connectée à travers un cinquième sélecteur (SE5), du type manuel, qui est positionné sur un parmi une pluralité de fils de fin de cycle d'une façon qui dépend de la position du premier sélecteur (SE1).

11. Equipement de mesure suivant la revendication 10, caractérisé en ce que sur le fil de commande dudit premier sélecteur (SE1) et sur les fils de sortie desdits deuxième et troisième sélecteurs (SE2, SE3) on a des organes d'amplification des signaux présents sur lesdits fils, les sorties des organes d'amplification étant de même connectées aux sondes (SN) du dispositif de mesure (MPT) pour permettre un contrôle de la régularité du fonctionnement du réseau d'insertion.

12. Equipement de mesure suivant la revendication 10 ou 11, caractérisé en ce que dans chacun des coupleurs optiques (AO2) dudit groupe, le transistor a son collecteur connecté aux sondes du dispositif de mesure (MPT) pour permettre le contrôle de la régularité d'envoi des critères de marquage.

13. Equipement de mesure suivant l'une quelconque des revendications de 8 à 12, caractérisé en ce que ledit organe auxiliaire (AR) pour effectuer des enregistrements continus de grandes quantités de données comprend un ou plusieurs enregistreurs à cassette (RG2, RG3), qui reçoivent du dispositif de mesure (MPT) les signaux d'activation, des commandes et des données à enregistrer et délivrent les données enregistrées au dispositif de mesure (MPT) à l'aide de fils dudit bus (1), l'enregistreur ou chaque enregistreur dudit organe étant activé lorsque l'unité de traitement (UE) détecte l'épuisement de la capacité de l'enregistreur (RG1) du dispositif de mesure ou respectivement d'un autre enregistreur de l'organe auxiliaire (AR).

**Patentansprüche**

1. Programmierbare Fernsprech-Verkehrsmeßanlage, die an eine Vermittlungsstelle anzuschließen ist, zum zyklischen Abnehmen von Abtastwerten von Signalisierungskriterien unterschiedlicher Natur von Baueinheiten (OC1, OC2, ..., OCn) der Vermittlungsstelle, Verarbeiten dieser Abtastwerte und Abgeben von Verkehrsdaten, wobei die Meßanlage ein Meßgerät umfaßt, das folgende Einrichtungen aufweist: Abnahmemittel (SN, MX), die die Abtastwerte abnehmen und eine Anzahl von Spannungsabgreifern (SN) umfassen, von denen jeder mit einem Leiter (cd1, ..., cdn) verbunden ist, von denen wiederum jeder mit einem Meßpunkt in den Baueinheiten (OC1, OC2, ..., OCn) der Vermittlungsstelle zum Führen eines der Kriterien in Form einer Impulsspannung verbindbar ist und von denen jeder dazu gebaut ist, den Impulsspannungspegel auf Werte zu bringen, die innerhalb einer für die weitere Verarbeitung geeigneten Spanne liegen, und die weiterhin einen Multiplexer (MX) umfassen, dessen Eingänge mit den Ausgängen der Spannungsabgreifer (SN) verbunden sind; einen Komparator (CM), der an seinen Eingängen zum Vergleich die Ausgangssignale des Multiplexers und einen Schwellenwert empfängt und mit seinem eigenen Ausgangssignal, für die einzelnen Leiter getrennt, die Höher-Niedriger-Beziehung ihrer zugeordneten Eingangswerte anzeigt; und eine Verarbeitungseinheit (UE) mit gespeichertem Programm, die die durch die Kriterien wiedergegebenen Daten verarbeitet und durch Speichereinrichtungen (RAM, ROM) zum Speichern des Programms und der verarbeiteten Daten ergänzt ist, dadurch gekennzeichnet, daß die Spannungsabgreifer (SN) aus einander identischen Spannungsteilern aufgebaut sind und unabhängig vom abgegriffenen Kriterium nach dem selben Spannungsverminderungsverhältnis arbeiten, und daß der den Schwellenwert an den Komparator (CM) liefernde Eingang mit einem Variabelwert-Generator (CNA) verbunden ist, dessen Ausgangswert durch die Verarbeitungseinheit (UE) in Abhängigkeit von der Natur des Kriteriums bestimmt ist.

2. Meßanlage nach Anspruch 1, dadurch gekennzeichnet, daß der Multiplexer (MX) gegen den Komparator (CM) zu einen mehrfachen Ausgang aufweist, der mit einer ersten Gruppe von Eingängen des Komparators verbunden ist, um an diesen die von einer gleichen Zahl von Spannungsabgreifern ausgehenden Spannungen zu senden, und daß der Komparator an einer zweiten Gruppe von Eingängen die Schwellenwerte empfängt und sie mit den einzelnen an seiner ersten Gruppe von Eingängen anliegenden Spannungen vergleicht und an die Verarbeitungseinheit (UE) die die Kriterienzustände anzeigenden Bits gruppenweise sendet.

3. Meßanlage nach Anspruch 1 oder 2, dadurch gekennzeichnet, daß der Komparator (CM) ein Analog-Komparator ist, der die Abtastwerte in analoger Form empfängt und als Schwellenwert eine analoge Bezugsspannung empfängt, die von einem Digital/Analog-Umsetzer (CNA) erzeugt ist, dessen Eingang mit der Verarbeitungseinheit (UE) gekoppelt ist.

4. Meßanlage nach einem der Ansprüche 1 bis 3, dadurch gekennzeichnet, daß der Multiplexer (MX) unmittelbar durch die Verarbeitungseinheit (UE) sowohl hinsichtlich der Leitergruppenwahl als auch hinsichtlich der Abtastperiodizität gesteuert ist.

5. Meßanlage nach einem der Ansprüche 1 bis 4, dadurch gekennzeichnet, daß die Verarbeitungseinheit (UE) programmierbar ist und die Speichereinrichtungen einen Speicher (RAM) mit wahlfreiem Zugriff umfassen, der in einem ersten, den Leitern (cd1, cd2, ..., cdn) zugeordneten Bereich die sich auf den Zustand der Leiter beziehenden unverarbeiteten Daten, in einem zweiten, den Baueinheiten (OC1, OC2, ..., OCn) zugeordneten Bereich die verarbeiteten Daten, die sich auf die einzelnen Baueinheiten der Vermittlungsstelle beziehen, und in einem dritten Bereich das durchzuführende Programm speichert, wobei der zweite Bereich auch als Pufferspeicher im Bezug auf die Übertragung der verarbeiteten Daten zu einem Aufzeichnungsgerät (RG1) und auch dazu dient, das durchzuführende Programm in den Speicher (RAM) mit wahlfreiem Zugriff zu laden.

6. Meßanlage nach Anspruch 5, dadurch gekennzeichnet, daß die Speichereinrichtungen außerdem einen Festwertspeicher (ROM) umfassen, der der Verarbeitungseinheit (UE) zugeordnet ist und ein Programm enthält, das das Laden der Programme in den Speicher (RAM) mit dem wahlfreien Zugriff steuert.

7. Meßanlage nach einem der Ansprüche 1 bis 6, dadurch gekennzeichnet, daß die Verarbeitungseinheit (UE) eine Ausgangs-Sammelleitung (1) aufweist, über die die Meßanlage ergänzt werden kann durch zusätzliche Vorrichtungen (AM, AV, AR), um spezielle Messungen durchzuführen, und/oder durch ein Modem für die Datenübertragung zu einer höherrangigen Verarbeitungseinheit.

8. Meßanlage nach Anspruch 7, dadurch gekennzeichnet, daß zu den zusätzlichen Vorrichtungen wenigstens die folgenden gehören: eine Vorrichtung (AM) zum Durchführen von Messungen, die von Kriterien mit Sinusverlauf und/oder Tonsignalen ausgehen; eine Vorrichtung (AV) zum Abnehmen von Kriterien von Einsetz-Schaltungen (ANLi) zur Verkehrsmessung, bestehend aus einem Relaiswähler, der auf einer mehradrigen Meßleitung die auf Belegungsleitern vorhandenen Signale oder Markier-Kriterien, die nicht angeschlossene Meßpunkte, Wechsel des Typs der Vermittlungsstellen-Baueinheit, Ende einer Gruppe von Vermittlungsstellen-Baueinheiten und Ende eines Meßzyklus anzeigen, überträgt; und eine Vorrichtung (AR) zum Durchführen fortgesetzter Aufzeichnungen großer Datenmengen.

9. Meßanlage nach Anspruch 8, dadurch gekennzeichnet, daß die Vorrichtung (Am) zum Durchführen von Messungen, die von Kriterien mit Sinusverlauf und/oder Tonsignalen ausgehen, ein Mehrzahl von Entkopplern (DS1, . . . , DS24) hoher Impedanz für das Abnehmen der Kriterien und/oder Tonsignale von den Leitungen, auf denen sie vorliegen, ferner eine Gruppe von Filterbatterien (BF1, . . . , BF3) in gegenüber den Entkopplern verringerter Anzahl, die Schaltkennzeichenfrequenzen erkennen, die Kriterien mit Sinusverlauf in Impulsform umsetzen und die entsprechenden impulsiven Signale an die Spannungsabgreifer (SN) des Meßgeräts (MPT) liefern, und schließlich eine Gruppe von Tondetektoren (RT1, . . . , RT6), die die Tonsignale erkennen, sie in Impulsform umsetzen und die entsprechenden impulsiven Signale zu den Spannungsabgreifern (SN) des Meßgeräts (MPT) senden, umfaßt; und daß zwischen die Filterbatterien (BF1, . . . , BF3) und die Tondetektoren (RT1, . . . , RT6) einerseits und die Entkoppler (DS1, . . . , DS24) andererseits eine voll zugängliche Suchstufe (CE) eingesetzt ist, die auf der Basis von von der Verarbeitungseinheit (UE) auf das Erkennen einer belegten Leitung hin abgegebenen Steuersignalen den dieser Leitung zugeordneten Entkoppler mit einer freien Filterbatterie und einem freien Tondetektor verbindet, wobei die Verbindung mit der Filterbatterie bis zum Ende der Schaltkennzeichen mit Sinusverlauf aufrechterhalten wird und die Verbindung mit dem Detektor bis zur Erkennung des Ruf- oder Belegttons oder bis zum Melden oder zum Einhängen, falls diese Vorgänge dem Ton vorhergehen, aufrechterhalten wird.

10. Meßanlage nach Anspruch 8 oder 9, dadurch gekennzeichnet, daß die Vorrichtung (AV) zum Abnehmen der Kriterien von Einsetz-Schaltungen (ANLi) für die Verkehrsmessung mit einer Mehrzahl der Einsetz-Schaltungen verbunden ist und aus folgenden Einzelschaltungen besteht:

— einem ersten Wähler (SE1) für jede der Einsetz-Schaltungen, der manuell betätigt ist uns über seine feststehenden Schaltstücke mit Leitern (e₁, . . . , e₉) verbunden ist, die den Anfangspunkt der Messung identifizieren, und dessen Arm mit einem Leiter (eₓ) der Sammelleitung (1) verbunden ist, über den er vom Meßgerät den Befehl zum Meßbeginn empfängt, wobei dieser Leiter mit dem ersten Wähler (SE1) sämtlicher dieser Einsetz-Schaltungen verbunden ist;

— einem zweiten Wähler (SE2) und einen dritten Wähler (SE3) für jede der Einsetz-Schaltungen, die die Steuerleiter der Einsetz-Schaltungen zum Bewirken einer fort-schreitenden Betätigung der Einsetz-Schal-tungen aufeinanderfolgend erden und die über Verbindungen (10, 11) der Sammelleitung (1) mit dem Meßgerät verbunden sind;

— einem ersten optischen Koppler (AO1) mit einer an eine Steuerverbindung (12), die einen Teil der Sammelleitung (1) darstellt, angeschlossenen Fotodiode und einem Transistor, dessen Emitter mit einer zusätzlichen Stromquelle (SC) und dessen Kollektor mit dem Arm eines vierten Wählers (SE4), an den die vieladrige Meßleitung (M) parallel für sämtliche Einsetz-Schaltungen angeschlossen ist, verbunden ist;

— einer Gruppe optischer Koppler (AO2), von denen jeder eine Photodiode und einen Phototransistor enthält und einem der Markier-Kriterien zugeordnet ist und in denen die Fotodiode mit der zusätlichen Stromquelle (SC) und mit einem Leiter verbunden ist, der das Kriterium zur Einsetz-Schaltung überträgt, wobei die Diode des für das Kriterium des Zyklusendes zuständigen Kopplers über einen fünften, manuell betätigten Wähler (SE5) angeschlossen ist, der auf einen aus einer Mehrzahl von Leitern des Zyklusendes in von der Stellung des ersten Wählers (SE1) abhängiger Weise gestellt ist.

11. Meßanlage nach Anspruch 10, dadurch gekennzeichnet, daß am Steuerleiter des ersten Wählers (SE1) und an den Ausgangsleitern des zweiten und des dritten Wählers (SE2, SE3) Verstärkereinrichtungen für die auf diesen Leitern liegenden Signale vorhanden sind, deren Ausgänge auch mit den Spannungsabgreifern (SN) des Meßgeräts (MPT) zur Ermöglichung einer Kontrolle des regulären Betriebs der Einsetz-Schaltung verbunden sind.

12. Meßanlage nach Anspruch 10 oder 11, dadurch gekennzeichnet, daß in jedem op-tischen Koppler (AO2) der Gruppe der Kollektor des Transistors zur Ermöglichung einer Überwachung des regulären Sendens der Markier-Kriterien mit den Spannungsabgreifern des Meßgeräts (MPT) verbunden ist.

13. Meßanlage nach einem der Ansprüche 8 bis 12, dadurch gekennzeichnet, daß die zusätzliche Vorrichtung (AR) zum Durchführen fort-gesetzter Aufzeichnungen großer Daten-mengen ein oder mehrere Kassetten-Magnetbandgeräte (RG2, RG3) umfaßt die vom Meßgerät (MPT) die Betätigungssignale, Befehle und aufzuzeichnenden Daten empfangen und die aufgezeichneten Daten zum Meßgerät (MPT) leiten, und zwar über Leiter der Sammelleitung (1), wobei das Magnetbandgerät oder die Magnetbandgeräte der Vorrichtung betätigt werden, wenn die Verarbeitungseinheit (UE) die Erschöpfung der Kapazität des Aufzeichnungsgeräts (RG1) des Meßgeräts bzw. eines weiteren Aufzeichnungsgeräts der zusätz-lichen Vorrichtung (AR) feststellt.

Fig.1

Fig. 2

1

Fig.3

Fig.4

Fig.6

2

Fig.5

0 041 262

0 041 262

Fig.8

START

ADDRESS WIRE
MEMORY OF
THE GROUP

READ NUMBER
OF OCTETS IN
THE GROUP

LOAD THRESHOLD
VOLTAGE IN
COMPARATOR

CONNECT MX TO
THE OCTET
PROBES

READ BYTES
C, K, Q, MSB

READ COMPARA-
TOR OUTPUTS

VARIATIONS
OF C, K, Q?  — NO

YES

EXAMINE VARIA-
TIONS AND STORE
C, K, Q

ADDRESS WIRE
MEMORY OF SUBSE-
QUENT GROUP

NO — LAST
OCTET ?

STOP

Fig. 7

START
(IMP1)

BIT K OF
THE WIRE
=1 ?  — NO

YES

STORE INSTANT OF
SEIZURE BEGINNING
(IN DEVICE-
RECORD)

SET VALUE IN
CHIS AND RESET
PRISP, MSB, EC
(IN DEVICE-RECORD)

SET SEL = SEL1,
IMP=IMP2,
RISP= RISP0
(IN DEVICE-RECORD)

UNMASK SELECTION
AND ANSWER WIRES IN
WIRE MEMORY

STOP

Fig. 9A

Fig. 9B

6

Fig. 11 A

Fig. 11 b

Fig. 12 A

7

Fig. 10 A

Fig. 10 B

Fig. 10 C

Fig. 11B

9

Fig. 11 c

# 0 041 262

fig. 12B